# EUROPÄISCHE PATENTSCHRIFT

(11) **EP 3 576 084 B1**
(45) Veröffentlichungstag und Bekanntmachung des Hinweises auf die Patenterteilung: **30.09.2020**
(21) Anmeldenummer: 18000483.0
(22) Anmeldetag: 29.05.2018
(51) Int. Cl.: G10L 15/22, G06F 3/01, G06F 3/16, G10L 15/08

(54) **EFFIZIENTE DIALOGGESTALTUNG**
EFFICIENT DIALOG DESIGN
CONCEPTION DU DIALOGUE EFFICACE

(43) Veröffentlichungstag der Anmeldung: 04.12.2019
(73) Patentinhaber: Neumann, Christoph, 97072 Würzburg (DE)
(72) Erfinder: Neumann, Christoph, 97072 Würzburg (DE)
(74) Vertreter: Reich, Jochen

(56) Entgegenhaltungen:
- US-A1- 2007 094 004
- US-A1- 2010 049 513
- US-A1- 2015 134 337
- US-A1- 2017 060 839
- US-A1- 2017 069 316
- US-A1- 2017 116 982

## Beschreibung

Die vorliegende Erfindung ist gerichtet auf ein Verfahren zur effizienten Dialoggestaltung und Interpretation in einem rechnergestützten, automatisierten Dialogsystem. Die vorliegende Erfindung bietet u. a. die Vorteile, dass bei der Erstellung von Dialogen der Arbeitsaufwand reduziert wird und somit auch die Fehleranfälligkeit. Darüber hinaus ist es möglich, einen Kontext von Teildialogen zu berücksichtigen und in Abhängigkeit dieses Kontextes dynamisch einen Dialog zu erstellen. Ferner kann das vorgeschlagene Verfahren einen Dialog mit einem menschlichen Benutzer selbst initiieren. Die vorliegende Erfindung betrifft ferner eine entsprechend eingerichtete Systemanordnung sowie ein Computerprogrammprodukt mit Steuerbefehlen, welche das Verfahren ausführen bzw. die Systemanordnung betreiben.

US 2015/ 0134337 A1 zeigt ein konversationsbasiertes Suchsystem mit einem Konversationsszenario.

DE 10 2012 019 178 A1 zeigt ein Computerprogrammprodukt zum Interpretieren einer Benutzereingabe, um einen Task auf einer mindestens einen Prozessor aufweisenden Rechenvorrichtung auszuführen.

DE 60 030 920 T2 zeigt Verfahren zum Sammeln von Daten, die einer Stimme eines Benutzers eines Sprachsystems zugeordnet sind, in Zusammenhang mit einem Data-Warehouse bzw. Datenreservoir.

DE 11 2016 003 335 T5 zeigt Systeme für die Verarbeitung von natürlicher Sprache, Natural Language Processing NLP, und insbesondere NLP-Systeme, die Systeme für die Generierung von natürlicher Sprache, Natural Language Generation NLG, beinhalten, welche wiederum Systeme für die

Übersetzung von natürlicher Sprache, Natural Language Translation NLT, Systeme für die Verarbeitung von natürlich sprachlichen Fragen und Antworten, Natural Language Processing Question & Answer NLP Q&A, Systeme für Dialoge in natürlicher Sprache und dergleichen mehr beinhalten.

US 2007/0094004 A1 zeigt ein weiteres Dialogsystem.

Aus dem Stand der Technik sind sogenannte Dialogsysteme bekannt, wobei ein maschinelles System mit einem menschlichen Benutzer interagiert und Sprachbefehle des menschlichen Benutzers entgegennimmt. Auf diese Befehle werden sodann Reaktionen initiiert und der Benutzer erhält eine entsprechende Antwort. Solche Systeme sind beispielsweise unter der eingetragenen Marke "Alexa" oder "Siri" bekannt. Neben der Infotainmentbranche finden solche Systeme beispielsweise im Automobilbereich Einsatz, wo der Benutzer ein Navigationssystem oder andere Funktionen sprachlich steuern kann.

Der Stand der Technik zeigt ferner Vorrichtungen, welche beispielsweise der Umwandlung von Schall in Text und wieder zurück dienen. Solche Systeme werden generell als "Speech Recognition"-Systeme bezeichnet. Dies kann derart erfolgen, dass der menschliche Benutzer einen Satz spricht und die aufgenommenen akustischen Signale sodann mittels Pattern Matching einem Text zugeordnet werden. Es ist auch bekannt, einen Text bereitzustellen, der sodann in natürliche akustische Sprache umgewandelt wird. Dieses Verfahren wird generell als "Text-To-Speech" bezeichnet.

Darüber hinaus ist ein Interpretieren von Text bekannt, was beispielsweise im Rahmen des sogenannten "Natural Language Understanding" erfolgt. Solche Verfahren ermöglichen es, dass aus einem bestehenden Textstück Schlüsselwörter extrahiert werden und sodann weiterverarbeitet werden. Darüber hinaus sind Techniken der natürlichen Sprachverarbeitung bekannt, was auch als Natural Language Processing NLP bekannt ist. Herkömmliche Dialogsysteme werden derart implementiert, dass der Benutzer eine akustische oder textliche Eingabe gibt, die in einen Text umgewandelt wird. Sodann wird ein entsprechender Quellcode angesteuert, welcher den weiteren Dialog steuert. In einer solchen Dialogsteuerung bzw. einem Dialogprotokoll ist hinterlegt, welche Antwort auf welche Frage gegeben wird. Darüber hinaus kann angegeben sein, welche Aktion auf welchen Befehl ausgeführt wird. Hierzu wird für jeden Dialog ein eigener Quelltext bereitgestellt, welcher hartcodiert den Dialogverlauf beschreibt. Solche Bausteine, die einen Dialog beschreiben, haben den Nachteil, dass hier der komplette Dialog modelliert werden muss und insbesondere auch die bereitgestellten Textbausteine hinterlegt werden müssen. Ein solcher Dialog läuft starr ab, sobald er neu gestartet wird. Somit ist es nur schwer möglich, ein Kontextwissen einfließen zu lassen, und der Dialog läuft typischerweise jedesmal gleich ab.

Darüber hinaus besteht der Nachteil, dass solche einzelnen fest codierten Dialoge aufwändig zu implementieren sind, da bezüglich jeder Anfrage und jeder Dialogverzweigung ein eigener Dialog vorab erstellt werden muss. Somit ergibt sich ein weiteres Problem, nämlich dass hierzu ein umfangreicher Quellcode entsteht, der entsprechend getestet werden muss. Dieses Testen ist arbeitsaufwändig und zudem potenziell fehleranfällig. Zudem empfindet oftmals der Benutzer keinen intuitiven Dialogverlauf, da die Dialoge bereits vorab fest vorgegeben sind.

Es ist daher eine Aufgabe der vorliegenden Erfindung, ein verbessertes Verfahren zur effizienten Dialoggestaltung und Interpretation vorzuschlagen, welches es ermöglicht, dass dynamische Dialoge entstehen, welche in Abhängigkeit einer Benutzereingabe individuell verlaufen können. Das vorgeschlagene Verfahren soll derart dynamisch aufgebaut sein, dass Dialogbausteine zur Laufzeit ausgewählt und verwendet werden können. Darüber hinaus ist es eine Aufgabe der vorliegenden Erfindung, eine entsprechend eingerichtete Systemanordnung bereitzustellen sowie ein Computerprogrammprodukt mit Steuerbefehlen, welche das vorgeschlagene Verfahren implementieren bzw. die vorgeschlagene Systemanordnung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zur effizienten Dialoggestaltung und Interpretation in einem rechnergestützten, automatisierten Dialogsystem vorgeschlagen, aufweisend ein Abspeichern einer Mehrzahl von Dialogprotokollen zu jeweils mindestens zwei Schlüsselwörtern, wobei die Dialogprotokolle jeweils eine dynamische Abfolge eines Dialogs spezifizieren und die dynamische Abfolge des Dialogs Teildialoge beschreibt, welche anhand von Verzweigungen zusammengestellt werden, wobei das Dialogprotokoll ein Vorhandensein von Dialogeinheiten und einen Dialogverlauf, welcher die Dialogeinheiten in temporale Abfolge setzt, spezifiziert, ein Auswählen eines Dialogprotokolls in Abhängigkeit von mindestens zwei zur Laufzeit bereitgestellten Schlüsselwörtern , wobei mindestens das erste Schlüsselwort mittels einer akustischen Benutzereingabe unter Verwendung einer Technologie zum Verstehen einer natürlichen Sprache bereitgestellt wird, welche anhand einer Tonlage der akustischen Benutzereingabe erkennt, ob es sich um eine Frage oder eine Aussage handelt, und ferner mindestens ein zweites Schlüsselwort durch einen Steuerbefehl bereitgestellt wird, wobei der Benutzer mindestens das erste Schlüsselwort wählt und der Steuerbefehl hierzu einen semantischen Kontext des gewählten Schlüsselworts modelliert und hierdurch das mindestens zweite Schlüsselwort bereitstellt, woraufhin das entsprechende Dialogprotokoll ausgewählt wird, ein Zuordnen von Textbausteinen zu Dialogeinheiten des Dialogprotokolls und ein Ausführen des Dialogprotokolls zur Laufzeit.

Der Fachmann erkennt hierbei, dass die Verfahrensschritte iterativ und/oder in anderer Reihenfolge ausgeführt werden können. Zudem können die einzelnen Schritte Unterschritte aufweisen. So kann beispielsweise das Abspeichern einer Mehrzahl von Dialogprotokollen iterativ erfolgen, und es können stets neue Dialogprotokolle eingepflegt werden. Das Zuordnen von Textbausteinen zu Dialogeinheiten des Dialogprotokolls kann zur Laufzeit, also während des Dialogs, durchgeführt werden, oder aber auch bereits vorab. Das Ausführen des Dialogprotokolls zur Laufzeit umfasst mehrere Unterschritte, wie sie beispielsweise beim Speech-Recognition-Vorgang bzw. Natural-Language-Understanding-Vorgang vorgesehen sind.

Insbesondere umfasst das vorgeschlagene Verfahren bekannte Techniken, welche vorliegend nicht angeführt wurden, da sie auf Basis herkömmlicher Komponenten implementiert werden können. So gibt der Benutzer erfindungsgemäß typischerweise eine akustische Frage bzw. Antwort ein und erhält sodann eben auch eine akustische Antwort bzw. Frage. Dies impliziert, dass die akustischen Signale, also die Sprache, in einen Text konvertiert wird und bei der maschinellen Antwort sodann eben auch ein Ausgabetext wieder in Sprache konvertiert wird. Auf diese Art und Weise entsteht ein Dialogsystem, welches kommunikativ mit dem Benutzer interagiert. Die Erfindung ist auch auf Dialogsysteme, z.B. chatbots gerichtet.

Das vorgeschlagene Verfahren ist ein effizientes Verfahren, da erfindungsgemäß eine Entkopplung der Dialogprotokolle von den einzelnen Textbausteinen erfolgt. Auf diese Art und Weise ist es möglich, dass Dialoge nicht hartcodiert hinterlegt werden müssen und somit jeweils einzeln erstellt werden müssen. Somit wird erfindungsgemäß der Nachteil des Stands der Technik überwunden, dass gemäß herkömmlicher Verfahren die Dialoggestaltung derart abläuft, dass die Textbausteine bereits in den Quellcode eingebettet sind. Erfindungsgemäß ist es hingegen möglich, dass Dialogprotokolle vorgesehen werden, welche dynamisch Einzeldialoge zusammenstellen und zudem eine Entkopplung der Textbausteine erfolgen kann. Darüber hinaus ist eine Interpretation der Dialoge möglich, da situationsspezifisch auf den Dialogverlauf eingegangen werden kann und nicht nur Schlüsselwörter als Benutzereingabe verwendet werden können, welche durch den Benutzer selbst bereitgestellt werden, sondern vielmehr können Steuerbefehle entsprechende Schlüsselwörter beibringen. Schlüsselwörter können auch vom Dialogprotokoll in Abhängigkeit vom Kontext erzeugt werden (dann muss gar kein externer Steuerbefehl vorliegen). Z.B. zweimalig wurde die Frage falsch verstanden, dann wird automatisch zu einer Ersatzfrage weitergeleitet.

Das vorgeschlagene Verfahren läuft rechnergestützt und automatisiert derart ab, dass das vorgeschlagene Verfahren selbsttätig mit einem Benutzer interagieren kann und somit das vorgeschlagene System auch Dialoge selbst anhand der Dialogprotokolle entwerfen kann. Folglich werden alle Verfahrensschritte computerbasiert durchgeführt, wobei lediglich der Benutzer eine akustische oder textuelle Eingabe liefert.

Um dies durchzuführen, erfolgt ein Abspeichern einer Mehrzahl von Dialogprotokollen zu jeweils mindestens einem Schlüsselwort. Somit werden Dialogprotokolle erstellt, welche beispielsweise als Dialogeinheiten Aktivitäten vorsehen, die zeitlich bzw. logisch miteinander in Verbindung gesetzt werden. Die Dialogprotokolle spezifizieren also keine herkömmlichen starren Abläufe, sondern sehen vielmehr vor, wann welcher Akteur eine Aktivität ausführt, ohne hierbei festzulegen, welche Textbausteine verwendet werden. Dies überwindet den Nachteil des Stands der Technik, dass eine Verknüpfung von Dialoglogik und Textbausteinen erfolgt. Die Dialogprotokolle spezifizieren beispielsweise, dass bei einer bestimmen Benutzereingabe ein Nachfragen durch das Dialogsystem erfolgt. Darüber hinaus können Dialogprotokolle spezifizieren, dass, falls der Benutzer ein Thema vorschlägt, entsprechende Schlüsselwörter extrahiert werden und sodann das Dialogsystem eine Frage zu stellen hat. Wird erkannt, dass der Benutzer selbst eine Frage stellt, so sieht das Dialogprotokoll vor, dass das System nach einer entsprechenden Antwort sucht und diese bereitstellt. Somit entspricht einem Dialogprotokoll also einem dynamischen Ablauf eines Gesprächs bzw. Dialogs zwischen dem Dialogsystem und dem Benutzer.

Die Dialogprotokolle werden vorab bereitgestellt, d. h. vor der Laufzeit, und stehen somit bereits zur Verfügung, falls der Dialog gestartet wird. Somit können die Dialogprotokolle als abstrakt dahingehend bezeichnet werden, da sie keine konkreten Textbausteine aufweisen, sondern vielmehr vorsehen, welcher dynamische Ablauf der Dialog nehmen soll.

Den einzelnen Dialogprotokollen sind Schlüsselwörter zugeordnet, d. h. ein oder mehrere Schlüsselwörter. Ein Schlüsselwort kann beispielsweise als ein Thema bezeichnet werden, bezüglich dessen der Dialog geführt wird. So können herkömmliche Verfahren verwendet werden, welche aus einem Satz ein besonders hervorstehendes Substantiv auswählen. So kann in einem Anwendungsszenario der Benutzer beispielsweise nach dem Wetter fragen und sodann ist das vorgeschlagene Verfahren anhand von herkömmlichen Methoden in der Lage zu extrahieren, dass der Benutzer tatsächlich nach dem Wetter fragt. Hierzu kann auch die Tonlage der Eingabe berücksichtigt werden und sodann erkannt werden, ob es sich hier um eine Aussage oder um eine Frage handelt. Wird erkannt, dass eine Frage bezüglich des Wetters vorliegt, so ist das entsprechende Schlüsselwort "Wetter", und es wird ein Dialogprotokoll ausgewählt, welches vorsieht, dass das Dialogsystem eine Frage stellt und sodann auf eine erwartete Antwort seitens des Benutzers die eingangs gestellte Frage beantwortet.

An dieser Stelle sind noch keine Textbausteine vorgesehen, sondern lediglich die einzelnen Aktivitäten des Protokolls. So kann auf die Frage nach dem Wetter das vorgeschlagene Verfahren vorsehen, dass eine Frage seitens des Dialogsystems gestellt wird, welche sich auf eine bestimmte Ortschaft bezieht. Sodann wird der Textbaustein zugeordnet "An welchem Ort möchten Sie das aktuelle Wetter erfahren?". Daraufhin kann das Dialogprotokoll vorsehen, dass der Benutzer zu antworten hat. Wird eine entsprechende Antwort bereitgestellt, so kann hieraus die Ortschaft extrahiert werden und hieraufhin kann wiederum vorgesehen werden, dass das Dialogsystem eine Antwort bereitstellen muss. Zu diesem Zeitpunkt liegt dem Dialog-system also das Schlüsselwort "Wetter" vor und dann beispielsweise der Ort "München", welcher von dem Benutzer bereitgestellt wird. Mit dieser Information kann das System mittels einer bereitgestellten Schnittstelle eine Datenbankabfrage durchführen, und sodann kann das Dialogprotokoll vorsehen, dass das Dialogsystem eine Antwort geben muss und nach der Antwort das Verfahren terminiert. So kann das Dialogsystem die Wetteransage durchführen und hierbei die ausgelesenen Wetterparameter aus einer Datenbank bereitstellen. Da hierbei typischerweise die Anfrage zufriedenstellend beantwortet sein sollte, kann das Verfahren terminieren.

Es kann jedoch auch ein Teildialogprotokoll eine Verzweigung zu einem anderen Teildialogprotokoll vorsehen und sodann kann beispielsweise ein Dialogprotokoll zum Schlüsselwort "Ausflugsziel" gewählt werden. Hat das Dialogsystem also die Anfrage nach dem Wetter beantwortet, so kann das Dialogprotokoll derart verzweigen, dass ein Teildialogprotokoll gewählt wird, welches den Benutzer frägt, ob er bei schönem Wetter einen Ausflug machen will. Der oben beschriebene Vorgang wiederholt sich dann und nach einer entsprechenden Datenbankabfrage können dem Benutzer geeignete Aktivitäten vorgeschlagen werden, die sowohl zum Thema "Wetter" als auch zum Thema "München" passen. Dabei erschließt sich das System als Ort das Ausflugsziel "München" selbsttätig aus dem vorherigen Dialogverlauf, ohne dass der User es noch einmal sagen muss. Auf diese Art und Weise wird ein dynamischer Ablauf eines Dialogs kreiert und es erfolgt eine Abkopplung des Dialogprotokolls von den tatsächlichen Textbausteinen. Erfindungsgemäß erfolgt zudem ein Zuordnen von Textbausteinen zu Dialogeinheiten des Dialogprotokolls, was entweder zur Laufzeit erfolgen kann oder vorab. Bei der Laufzeit handelt es sich immer um die Ausführungszeit des Dialogs an sich. Erfindungsgemäß wird der Nachteil überwunden, dass der bereitgestellte Quellcode sowohl die Textbausteine als auch die einzelnen Aktivitäten, d. h. die Dialogeinheiten, bereitstellt. So können die Dialogeinheiten des Dialogprotokolls als abstrakte Bausteine definiert werden, welche vorsehen, dass ein Dialogsystem eine Frage stellen muss. Wie die Frage denn nunmehr konkret auszugestalten ist, gibt der entsprechende Textbaustein an. Hierdurch stellt sich ein weiterer Vorteil gegenüber dem Stand der Technik ein, nämlich dass das vorgeschlagene Verfahren besonders sprachunabhängig ist. So können generische Dialogprotokolle erstellt werden und hierzu Textbausteine in allen Sprachen verwendet werden. So kann ein Dialogprotokoll lediglich mit Textbausteinen der deutschen Sprache verwendet werden. Wählt der Benutzer nunmehr eine andere Sprache, so ist nicht ein neuer Quellcode zu verwenden, sondern vielmehr werden sodann dem unveränderten Dialogprotokoll lediglich andere Textbausteine, beispielsweise in englischer Sprache, zugeordnet. Somit ist das System auch weniger wartungsintensiv als herkömmliche Systeme, da die Dialoglogik, also die Dialogprotokolle, von den tatsächlich anzuwendenden textuellen Inhalten getrennt werden. Folglich entsteht auch bei der Wartung eines solchen Systems bzw. bei der Durchführung eines solchen Verfahrens weniger Aufwand als bei herkömmlichen Systemen bzw. Verfahren.

Außerdem kann ein bestehendes Dialogprotokoll samt Textbausteinen unverändert in eine neue Entwicklungsumgebung portiert werden (ohne Quellcode neu zu schreiben oder gar in eine andere Programmiersprache umzuschreiben), solange in der Entwicklungsumgebung ein DCS (Dialog Control Script) bereitsteht.

Da nunmehr die Dialogprotokolle ausgewählt wurden und ein einzelnes Dialogprotokoll vorliegt, wozu auch bereits die Textbausteine vorliegen, kann nunmehr der Dialog durchgeführt werden bzw. das Dialogprotokoll ausgeführt werden. Somit wird der Benutzer anhand des Dialogprotokolls durch den dynamischen Dialog geführt und bekommt immer dann entsprechende Angaben bzw. Fragen, falls dies das Dialogprotokoll vorsieht. Da das Dialogprotokoll auch Teilprotokolle vorsehen kann, kann jederzeit zu einem anderen Teildialogprotokoll verzweigt werden, falls der Benutzer eine entsprechende Eingabe gibt. Wurde beispielsweise der Benutzer nicht ausreichend informiert, so kann in einen anderen Dialog übergeleitet werden, welcher vorsieht, wie dem Benutzer ansonsten geholfen werden kann. Hierzu werden wiederum die entsprechenden Textbausteine ausgewählt und dem Benutzer präsentiert.

Gemäß einem Aspekt der vorliegenden Erfindung spezifiziert das Dialogprotokoll ein Vorhandensein von Dialogeinheiten und einen Dialogverlauf, welcher die Dialogeinheiten in temporale Abfolge setzt. Dies hat den Vorteil, dass ein Dialogverlauf bereitgestellt werden kann, der unabhängig von Textbausteinen an sich ist. Die Dialogeinheiten sehen lediglich vor, wann das vorgeschlagene Verfahren agieren soll und wann der Benutzer agieren soll. Darüber hinaus kann spezifiziert werden, welche Aktivität konkret als Dialogeinheit vorgesehen ist. So kann eine Dialogeinheit eine Eingabe durch den Benutzer oder durch das Dialogsystem sein. Darüber hinaus kann eine Dialogeinheit Steuerbefehle vorsehen, die an einem bestimmten Punkt innerhalb des Dialogs abgearbeitet werden sollen. So können erfindungsgemäß zwei Dialogeinheiten hintereinandergeschaltet werden, welche beide von dem Dialogsystem bedient werden müssen, wobei zuerst eine Datenbankabfrage in der ersten Dialogeinheit erfolgt, und in der zweiten Dialogeinheit ist spezifiziert, dass die ausgelesene Information an den Benutzer bereitgestellt werden muss. Bei der temporalen Abfolge kann es sich um ein Ablaufdiagramm handeln, wobei generell alternativ zur temporalen Abfolge auch eine logische Abfolge spezifiziert werden kann. So kann vorgesehen sein, dass stets eine Benutzereingabe abgewartet werden muss und sodann geantwortet werden muss. Es ist auch möglich, dass die Dialogeinheiten vorsehen, dass das Dialogsystem den Dialog initiiert und sodann der Benutzer antwortet.

Gemäß einem weiteren Aspekt der vorliegenden Erfindung werden die Dialogeinheiten als alphanumerische Parameter abgespeichert. Dies hat den Vorteil, dass eine speichereffiziente und einfache menschenlesbare Form gewählt werden kann, in der die Dialogeinheiten abgespeichert werden. So können die einzelnen Dialogeinheiten in eine gesonderte Datei ausgelagert werden und dem vorgeschlagenen Verfahren bereitgestellt werden.

Gemäß einem weiteren Aspekt der vorliegenden Erfindung werden die Dialogeinheiten tabellarisch abgespeichert. Dies hat den Vorteil, dass an den Spalten die Aktivitäten bzw. Akteure eingetragen werden können und in den Zeilen ein fortlaufender Index eingetragen werden kann, zu dem ein Teildialogprotokoll verweisen kann. So kann ein Dialog dynamisch kreiert werden, derart, dass der jeweilige Index angesprochen wird, und am Ende des Teildialogprotokolls wird auf einen weiteren Index dynamisch verwiesen, der sodann aufgerufen wird und ein weiterer Teildialog ausgeführt werden kann. Somit spezifizieren also die einzelnen Zeilen ein Teildialogprotokoll, welche dynamisch zusammengesetzt werden können.

Gemäß einem weiteren Aspekt der vorliegenden Erfindung wird das Schlüsselwort mittels einer Benutzereingabe und/oder durch einen Steuerbefehl bereitgestellt. Dies hat den Vorteil, dass sowohl der Benutzer eine akustische oder textliche Eingabe tätigen kann, woraus das Schlüsselwort extrahiert wird, oder aber es werden Steuerbefehle ausgeführt, welche sodann das geeignete Dialogprotokoll auswählen. Somit kann beispielsweise ein Makro erstellt werden, der wiederum mehrere Steuerbefehle umfasst. Diese Steuerbefehle sind eingerichtet, das Schlüsselwort bereitzustellen. Auch kann eine Kombination aus Benutzereingabe und Steuerbefehl derart erfolgen, dass der Benutzer ein erstes Schlüsselwort wählt und der Steuerbefehl hierzu einen Kontext modelliert, woraufhin das entsprechende Dialogprotokoll ausgewählt wird.

Gemäß einem weiteren Aspekt der vorliegenden Erfindung wird das Schlüsselwort unter Verwendung einer Technologie zum Verstehen einer natürlichen Sprache bereitgestellt. Dies hat den Vorteil, dass bereits installierte bzw. implementierte Komponenten zur sogenannten "Natural Language Understanding" Einsatz finden können. Somit ist es also möglich, dass ein Benutzer eine Benutzereingabe akustisch tätigt, diese textuell konvertiert wird und sodann aus dieser akustischen Eingabe ein oder mehrere Schlüsselwörter extrahiert werdenwird. Ein weiterer Erfindungsgemäßer Aspekt der NLU ist ein Mapping von einem Satz von verschiedenen matchbaren Schlüsselwörtern auf ein Schlüsselwort (z.B. Haus, Gebäude, Wolkenkratzer werden alle auf "Haus" gemappt) oder Alter: 43, 49 wird beides auf Altersgruppe 40-49 gemappt. Das schließt insbesondere auch "falsche" speech recognition resultate ein. So wird in Englisch "cups" in vielen Dialekten fast wie "cats" ausgesprochen, daher wird beispielsweise "cats" als Trigger für ein System verwendet, wo man "cups" erkennen möchte.

Gemäß einem weiteren Aspekt der vorliegenden Erfindung spezifiziert jeweils eine Dialogeinheit eine Aktivität eines Akteurs innerhalb des Dialogprotokolls. Dies hat den Vorteil, dass die Dialogeinheit angeben kann, ob nunmehr eine Frage, eine Antwort oder ein Steuerbefehl bereitzustellen ist. Entsprechende Akteure sind entweder der Benutzer, mit dem der Dialog geführt wird, oder aber auch das Dialogsystem. Hierbei können auch weitere Akteure verwendet werden, wie beispielsweise eine externe Datenbank, welche mittels eines Steuerbefehls anzusprechen ist.

Gemäß einem weiteren Aspekt der vorliegenden Erfindung beschreibt die dynamische Abfolge des Dialogs Teildialoge, welche anhand von Verzweigungen zusammengestellt werden. Dies hat den Vorteil, dass der Dialog dynamisch zur Laufzeit erstellt werden kann und sodann eben auch entsprechende Teildialogprotokolle Verwendung finden. Hierbei kann auf die Benutzereingabe gewartet werden und in Abhängigkeit der Benutzereingabe kann wiederum ein weiterer Teildialog ausgewählt werden. Hierdurch ergibt sich ein dynamisches Zusammenstellen von Teildialogen zur Laufzeit zu einem Gesamtdialog. Dies entspricht der Zusammenstellung von Teildialogprotokollen zu einem Dialogprotokoll.

Gemäß einem weiteren Aspekt der vorliegenden Erfindung wird eine Verzweigung in Abhängigkeit einer Benutzereingabe und/oder durch einen Steuerbefehl ausgewählt. Dies hat den Vorteil, dass nicht nur die akustischen Benutzereingaben Verwendung finden können, sondern vielmehr kann auch mittels einer Benutzereingabe ein Steuerbefehl, wie eine Datenbankabfrage, veranlasst werden.

Gemäß einem weiteren Aspekt der vorliegenden Erfindung gibt jede Dialogeinheit eine Aktivität des Dialogsystems, eine Aktivität eines Benutzers, ein Ausführen von Steuerbefehlen und/oder ein Terminieren des Verfahrens vor. Dies hat den Vorteil, dass die einzelnen Aktivitäten spezifiziert werden können, welche sich nicht nur auf das Dialogsystem an sich bzw. den menschlichen Benutzer richten, sondern vielmehr kann auch vorgeschlagen werden, welche Steuerbefehle zur Beantwortung der Benutzereingabe ausgeführt werden. Darüber hinaus kann spezifiziert werden, an welchem Zeitpunkt das Dialogprotokoll vorsieht, dass das Verfahren terminiert, da die Benutzeranfrage erfolgreich beantwortet wurde.

Gemäß einem weiteren Aspekt der vorliegenden Erfindung umfasst das Ausführen des Dialogprotokolls zur Laufzeit ein Betreiben eines akustischen Dialogs zwischen dem Dialogsystem und einem Benutzer. Dies hat den Vorteil, dass herkömmliche Komponenten Anwendung finden können, welche eine akustische Eingabe in Text umwandeln und sodann eine textuelle Ausgabe wieder in akustische Information umwandeln können.

Gemäß einem weiteren Aspekt der vorliegenden Erfindung wird das Verfahren auf einem mobilen Endgerät, in einem Fahrzeug oder auf einer stationären Recheneinheit ausgeführt. Dies hat den Vorteil, dass diverse Anwendungsszenarien abgedeckt werden können und alle gängigen Endgeräte bedient werden können. Bei einer stationären Recheneinheit kann es sich beispielsweise um einen herkömmlichen Personal Computer eines Benutzers handeln. Bei einem Einsatz im Fahrzeug kommt typischerweise eine Benutzerschnittstelle zum Einsatz, welche den Fahrer durch einen Dialog führt.

Gemäß einem weiteren Aspekt der vorliegenden Erfindung werden Schnittstellen zu bestehenden internetbasierten Diensten bereitgestellt. Dies hat den Vorteil, dass bereits implementierte Softwarekomponenten Wiederverwendung finden können und Internetdienste abgefragt werden können, welche Information zur Beantwortung der Benutzeranfragen bereitstellen bzw. Dienste wie Einkaufsmöglichkeiten bereitstellen.

Die Aufgabe wird auch gelöst durch eine Systemanordnung zur effizienten Dialoggestaltung und Interpretation in einem rechnergestützten Dialogsystem gemäß den Merkmalen des Patentanspruchs 10, aufweisend eine Speichereinheit eingerichtet zum Abspeichern einer Mehrzahl von Dialogprotokollen zu jeweils mindestens zwei Schlüsselwörtern, wobei die Dialogprotokolle jeweils eine dynamische Abfolge eines Dialogs spezifizieren und die dynamische Abfolge des Dialogs Teildialoge beschreibt, welche anhand von Verzweigungen zusammengestellt werden, wobei das Dialogprotokoll ein Vorhandensein von Dialogeinheiten und einen Dialogverlauf, welcher die Dialogeinheiten in temporale Abfolge setzt, spezifiziert, eine Recheneinheit eingerichtet zum Auswählen eines Dialogprotokolls in Abhängigkeit von mindestens zwei zur Laufzeit bereitgestellter

Schlüsselwörter, wobei die Systemanordnung eingerichtet ist mindestens das erste Schlüsselwort mittels einer akustischen Benutzereingabe unter Verwendung einer Technologie zum Verstehen einer natürlichen Sprache bereitzustellen, welche eingerichtet ist, anhand einer Tonlage der akustischen Benutzereingabe zu erkennen, ob es sich um eine Frage oder eine Aussage handelt, und die Systemanordnung ferner eingerichtet ist mindestens ein zweites Schlüsselwort durch einen Steuerbefehl bereitzustellen, wobei durch den Benutzer mindestens das erste Schlüsselwort wählbar ist und der Steuerbefehl hierzu eingerichtet ist einen semantischen Kontext des gewählten Schlüsselworts zu modellieren und hierdurch das mindestens zweite Schlüsselwort bereitzustellen, woraufhin das entsprechende Dialogprotokoll auswählbar ist, eine weitere Recheneinheit eingerichtet zum Zuordnen von Textbausteinen zu Dialogeinheiten des Dialogprotokolls und eine Dialogeinheit eingerichtet zum Ausführen des Dialogprotokolls zur Laufzeit.

Die Aufgabe wird auch gelöst durch ein Computerprogrammprodukt mit Steuerbefehlen gemäß den Merkmalen des Patentanspruchs 11, welche das vorgeschlagene Verfahren implementieren bzw. die vorgeschlagene Systemanordnung betreiben.

Erfindungsgemäß ist es besonders vorteilhaft, dass die Systemanordnung strukturelle Merkmale bereitstellt, welche funktional den einzelnen Verfahrensschritten entsprechen. Somit dient die Systemanordnung zum Ausführen des vorgeschlagenen Verfahrens. Das vorgeschlagene Verfahren ist wiederum eingerichtet, die Systemanordnung zu betreiben. Somit können die Verfahrensschritte auch als strukturelle Merkmale der Systemanordnung nachgebildet werden. Die Systemanordnung umfasst Einrichtungen, welche tatsächlich derart eingerichtet sind, wie es bereits angeführt wurde, und umfasst nicht lediglich generische Komponenten zur Eignung.

Weitere vorteilhafte Ausgestaltungen werden anhand der beigefügten Figuren näher erläutert. Es zeigen:
- Fig. 1:: ein herkömmliches Dialogsystem als Ausgangspunkt für die vorliegende Erfindung;
- Fig. 2:: eine Systemanordnung zur effizienten Dialoggestaltung und Interpretation gemäß einem Aspekt der vorliegenden Erfindung;
- Fig. 3:: ein weiteres Beispiel einer Systemanordnung zur effizienten Dialoggestaltung und Interpretation gemäß einem weiteren Aspekt der vorliegenden Erfindung;
- Fig. 4:: ein beispielhaftes Dialogprotokoll mit Dialogeinheiten gemäß einem Aspekt der vorliegenden Erfindung; und
- Fig. 5:: ein schematisches Ablaufdiagramm des vorgeschlagenen Verfahrens zur effizienten Dialoggestaltung und Interpretation gemäß einem weiteren Aspekt der vorliegenden Erfindung.

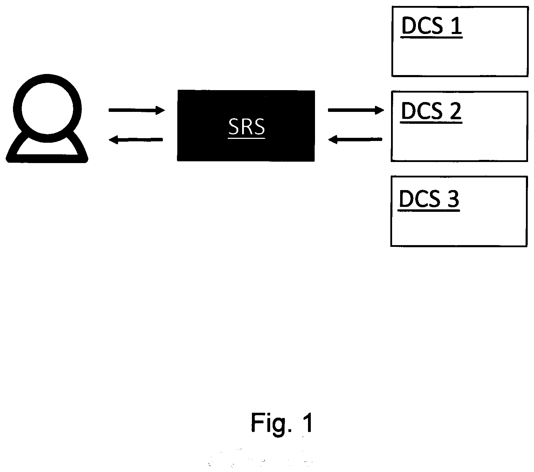

Fig. 1 zeigt auf der linken Seite einen menschlichen Benutzer, welcher eine Eingabe an ein Spracherkennungssystem übergibt. Bei einem Spracherkennungssystem handelt es sich um ein "Speech Recognition Service"-System SRS. Wie auf der rechten Seite eingezeichnet ist, sind die einzelnen Dialoge separat implementiert, und hierbei wird eine Ablauflogik spezifiziert, welche entsprechende Textbausteine beinhaltet. Dies ist besonders nachteilig, da die Dialogprotokolle mit den Textbausteinen verknüpft werden müssen. Hierdurch kann keine getrennte Wartung erfolgen und es resultiert ein gesteigerter technischer Aufwand.

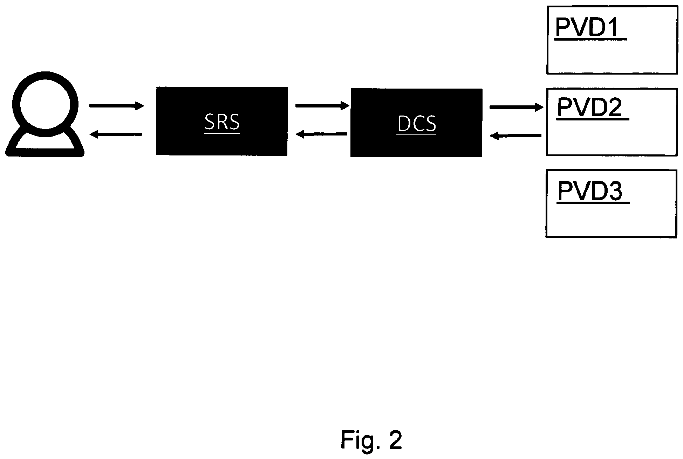

Fig. 2 zeigt erfindungsgemäß eine Anpassung des Systems gemäß Fig. 1 und sieht hierbei eine weitere Komponente vor, nämlich eine Auswahleinheit, beispielsweise eine "Dialog Control Script"-Einheit DCS. Diese Einheit ist den Textbausteinen auf der rechten Seite vorgeschaltet, und sodann kann zur Laufzeit der entsprechende Dialog ausgewählt werden und es müssen die Textbausteine auf der rechten Seite lediglich in das System integriert werden. Somit wird erfindungsgemäß der Nachteil überwunden, dass nicht, wie in Fig. 1 gezeigt, auf der rechten Seite in den drei schematischen Einheiten die Dialogprotokolle abgespeichert sind mitsamt Textbausteinen, sondern vielmehr sind die Dialogprotokolle in der vorgeschalteten Einheit DCS abgespeichert und von der rechten Seite müssen lediglich die einzelnen Textbausteine eingelesen werden. Alternativ sind die einzelnen Dialogprotokolle nicht in der DCS abgespeichert, sondern werden dynamisch/ zur Laufzeit von der DCS aufgerufen /eingelesen. Somit schafft die additive Komponente DCS spezifische Dialogverläufe und wählt sodann weitere Parameter von der rechten Seite aus. PVD steht vorliegend für Parameter Voice Dialog, beispielsweise PVD1, PVD2 und PVD3.

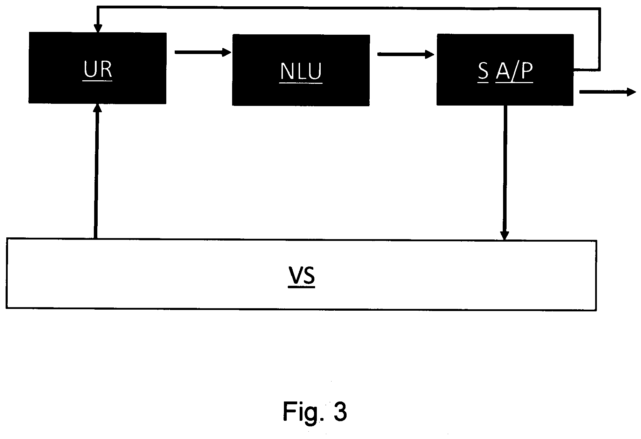

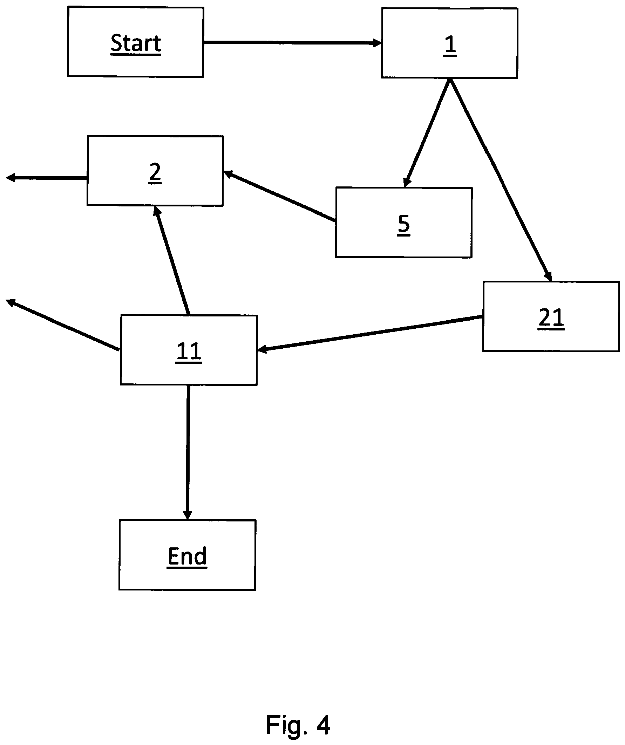

Fig. 3 zeigt ein entsprechendes erfindungsgemäßes System, wobei auf der linken Seite oben eine Benutzeranfrage, ein sogenannter "User Request" UR erfolgt, der an eine Interpretationskomponente übermittelt wird, die vorliegend "Natural Language Understanding"-Komponente NLU genannt wird. Sodann wird eine Antwort bzw. eine Frage generiert, was in einer weiteren Komponente erfolgt, die vorliegend als "System Answer/Prompt" S A/P bezeichnet wird. Sodann kann das Verfahren terminieren, was auf der rechten Seite durch den entsprechenden Pfeil nach außen gekennzeichnet ist, oder aber es erfolgt wieder ein Übermitteln der textuellen Antwort an den sogenannten "Voice Service" VS, der die textuelle Ausgabe wiederum in Sprache umwandelt und an den Benutzer bereitstellt, der dann wieder eine Benutzereingabe tätigen kann. Die umgekehrte Richtung ist in dieser Figur ebenfalls vorgesehen. Der Use case - "System fragt, Benutzer antwortet" (voice survey) ist vorteilhaft. Die Verwendung des Voice Service ist nicht verpflichtend Fig. 4 zeigt ein Dialogprotokoll mitsamt Dialogeinheiten, welche den Dialogablauf spezifizieren. Hierzu ist links oben eine Startdialogeinheit eingezeichnet, welche sodann in die erste Dialogeinheit verzweigt. Hierbei kann eine Benutzereingabe eingeholt werden und in Abhängigkeit der bereitgestellten Antwort wird entweder in die Dialogeinheit 5 oder 21 verwiesen. Die entsprechenden Dialogeinheiten können tabellarisch abgespeichert werden, wobei es sich bei dem numerischen Index um eine Zeilennummer handeln kann. Wie in der vorliegenden Figur gezeigt ist, kann somit dynamisch verzweigt werden, und jedes eingezeichnete Kästchen entspricht einer Dialogeinheit, die einem Akteur zugeordnet wird. So kann beispielsweise spezifiziert werden, dass die Dialogeinheit 11 von einem Benutzer bereitgestellt wird, und in einer darauffolgenden Dialogeinheit erfolgt ein Terminieren des Dialogs durch das vorgeschlagene Dialogsystem. Die beiden Pfeile auf der linken Seite verdeutlichen, dass noch weitere Dialogeinheiten vorgesehen werden können und dass es sich bei dem vorgeschlagenen Beispiel gemäß Fig. 4 lediglich um einen Ausschnitt aus einem Dialogprotokoll größeren Umfangs handelt. Da mehr als zwei Verzweigungen ebenso möglich sind wie diagonale Schritte in einen anderen Dialogast, ist eine Verzweigung von 11 auf 2 zurück auch möglich. All das trägt zu einer guten "User Experience" bei.

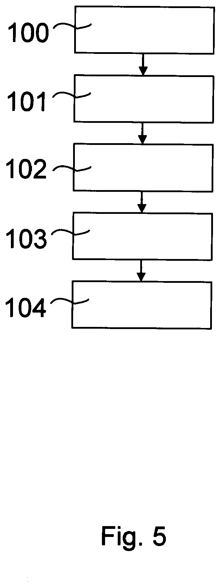

Fig. 5 zeigt in einem schematischen Ablaufdiagramm ein Verfahren zur effizienten Dialoggestaltung und Interpretation in einem rechnergestützten, automatisierten Dialogsystem, aufweisend ein Abspeichern 100 einer Mehrzahl von Dialogprotokollen zu jeweils mindestens zwei Schlüsselwörtern, wobei die Dialogprotokolle jeweils eine dynamische Abfolge eines Dialogs spezifizieren und die dynamische Abfolge des Dialogs Teildialoge beschreibt, welche anhand von Verzweigungen zusammengestellt werden, wobei das Dialogprotokoll ein Vorhandensein von Dialogeinheiten und einen Dialogverlauf, welcher die Dialogeinheiten in temporale Abfolge setzt, spezifiziert, ein Auswählen 101 eines Dialogprotokolls in Abhängigkeit von mindestens zwei zur Laufzeit bereitgestellten 102 Schlüsselwörtern, wobei mindestens das erste Schlüsselwort mittels einer akustischen Benutzereingabe unter Verwendung einer Technologie zum Verstehen einer natürlichen Sprache bereitgestellt wird, welche anhand einer Tonlage der akustischen Benutzereingabe erkennt, ob es sich um eine Frage oder eine Aussage handelt, und ferner mindestens ein zweites Schlüsselwort durch einen Steuerbefehl bereitgestellt wird, wobei der Benutzer mindestens das erste Schlüsselwort wählt und der Steuerbefehl hierzu einen semantischen Kontext des gewählten Schlüsselworts modelliert und hierdurch das mindestens zweite Schlüsselwort bereitstellt, woraufhin das entsprechende Dialogprotokoll ausgewählt wird, ein Zuordnen 103 von Textbausteinen zu Dialogeinheiten des Dialogprotokolls, und ein Ausführen 104 des Dialogprotokolls zur Laufzeit.

Erfindungsgemäß ist es besonders vorteilhaft, dass die Komponenten eines Dialogs in einem Voice-Dialog-System parametrisiert und nicht hartcodiert abgelegt werden und Dialogeinheiten durch Indexe eindeutig klassifiziert werden, wodurch es möglich wird, dass der Quellcode bzw. das Skript unverändert bleibt, und neue Dialoge als Parameter-Tabellen dargestellt werden können, und Dialoge zudem von einer Voice-Dialog-System-Entwicklungsumgebung in die andere portiert bzw. mittels Schnittstellen zugänglich gemacht werden können. Hierbei muss die Software nicht geändert werden und es können mehrteilige bzw. rekursive Dialoge durchgeführt werden, wobei insbesondere ermöglicht wird, dass die Maschine fragt und der Benutzer antwortet. Das Steuerprogramm selbst muss gemäß einem Aspekt der vorliegenden Erfindung einmal pro neuer Entwicklungsumgebung portiert werden, die DP dagegen nicht.

Erfindungsgemäß ist es schließlich vorteilhaft, dass die Maschine zunächst fragt, und dann der Benutzer antwortet, und die Antwort schließlich (per Steuerbefehl) dauerhaft gespeichert wird. Dies erlaubt die einfache Implementation von Anwendungen, die diese Dialogstruktur benutzen, insbesondere von Umfragen (voice surveys) und von Datensammlungen (voice data collections).

Der Dialogverlauf und Benutzereingaben können auch dauerhaft gespeichert werden (auf Festplatte oder in einer Datenbank), was vorteilhaft für voice surveys/ data collections ist.

## Patentansprüche

1. Verfahren zur effizienten Dialoggestaltung und Interpretation in einem rechnergestützten, automatisierten Dialogsystem, aufweisend:
- Abspeichern (100) einer Mehrzahl von Dialogprotokollen zu jeweils mindestens zwei Schlüsselwörtern, wobei die Dialogprotokolle jeweils eine dynamische Abfolge eines Dialogs spezifizieren und die dynamische Abfolge des Dialogs Teildialoge beschreibt, welche anhand von Verzweigungen zusammengestellt werden, wobei das Dialogprotokoll ein Vorhandensein von Dialogeinheiten und einen Dialogverlauf, welcher die Dialogeinheiten in temporale Abfolge setzt, spezifiziert;
- Auswählen (101) eines Dialogprotokolls in Abhängigkeit von mindestens zwei zur Laufzeit bereitgestellten (102) Schlüsselwörtern, wobei mindestens das erste Schlüsselwort mittels einer akustischen Benutzereingabe unter Verwendung einer Technologie zum Verstehen einer natürlichen Sprache bereitgestellt wird, welche anhand einer Tonlage der akustischen Benutzereingabe erkennt, ob es sich um eine Frage oder eine Aussage handelt, und ferner mindestens ein zweites Schlüsselwort durch einen Steuerbefehl bereitgestellt wird, wobei der Benutzer mindestens das erste Schlüsselwort wählt und der Steuerbefehl hierzu einen Kontext des gewählten Schlüsselworts modelliert und hierdurch das mindestens zweite Schlüsselwort bereitstellt, woraufhin das entsprechende Dialogprotokoll ausgewählt wird;
- Zuordnen (103) von Textbausteinen zu Dialogeinheiten des Dialogprotokolls; und
- Ausführen (104) des Dialogprotokolls zur Laufzeit.

2. Verfahren nach Anspruch 1, wobei die Dialogeinheiten als alphanumerische Parameter abgespeichert werden.

3. Verfahren nach einem der Ansprüche 1 oder 2, wobei die Dialogeinheiten tabellarisch abgespeichert werden.

4. Verfahren nach einem der vorhergehenden Ansprüche, wobei jeweils eine Dialogeinheit eine Aktivität eines Akteurs innerhalb des Dialogprotokolls spezifiziert.

5. Verfahren nach einem der vorhergehenden Ansprüche, wobei eine Verzweigung in Abhängigkeit einer Benutzereingabe und/ oder durch einen Steuerbefehl ausgewählt wird.

6. Verfahren nach einem der vorhergehenden Ansprüche, wobei jede Dialogeinheit eine Aktivität des Dialogsystems, eine Aktivität eines Benutzers, ein Ausführen von Steuerbefehlen und/ oder ein Terminieren des Verfahrens vorgibt.

7. Verfahren nach einem der vorhergehenden Ansprüche, wobei das Ausführen (104) des Dialogprotokolls zur Laufzeit ein Betreiben eines akustischen Dialogs zwischen dem Dialogsystem und einem Benutzer umfasst.

8. Verfahren nach einem der vorhergehenden Ansprüche, wobei das Verfahren auf einem mobilen Endgerät, in einem Fahrzeug oder auf einer stationären Recheneinheit ausgeführt wird.

9. Verfahren nach einem der vorhergehenden Ansprüche, wobei Schnittstellen zu bestehenden internetbasierten Diensten bereitgestellt werden.

10. Systemanordnung zur effizienten Dialoggestaltung und Interpretation in einem rechnergestützten Dialogsystem, aufweisend:
- eine Speichereinheit eingerichtet zum Abspeichern (100) einer Mehrzahl von Dialogprotokollen zu jeweils mindestens zwei Schlüsselwörtern, wobei die Dialogprotokolle jeweils eine dynamische Abfolge eines Dialogs spezifizieren und die dynamische Abfolge des Dialogs Teildialoge beschreibt, welche anhand von Verzweigungen zusammengestellt werden, wobei das Dialogprotokoll ein Vorhandensein von Dialogeinheiten und einen Dialogverlauf, welcher die Dialogeinheiten in temporale Abfolge setzt, spezifiziert;
- eine Recheneinheit eingerichtet zum Auswählen (101) eines Dialogprotokolls in Abhängigkeit von mindestens zwei zur Laufzeit bereitgestellten (102) Schlüsselwörtern, wobei die Systemanordnung eingerichtet ist mindestens das erste Schlüsselwort mittels einer akustischen Benutzereingabe unter Verwendung einer Technologie zum Verstehen einer natürlichen Sprache bereitzustellen, welche eingerichtet ist, anhand einer Tonlage der akustischen Benutzereingabe zu erkennen, ob es sich um eine Frage oder eine Aussage handelt, und die Systemanordnung ferner eingerichtet ist, mindestens ein zweites Schlüsselwort durch einen Steuerbefehl bereitzustellen, wobei durch den Benutzer mindestens das erste Schlüsselwort gewählt wird und der Steuerbefehl hierzu eingerichtet ist, einen Kontext des gewählten Schlüsselworts zu modellieren und hierdurch das mindestens zweite Schlüsselwort bereitzustellen, woraufhin das entsprechende Dialogprotokoll ausgewählt wird;
- eine weitere Recheneinheit eingerichtet zum Zuordnen (103) von Textbausteinen zu Dialogeinheiten des Dialogprotokolls; und
- eine Dialogeinheit eingerichtet zum Ausführen (104) des Dialogprotokolls zur Laufzeit.

11. Computerprogrammprodukt mit Steuerbefehlen, welche das Verfahren nach einem der Ansprüche 1 bis 9 ausführen, wenn sie auf einem Computer zur Ausführung gebracht werden.

## Claims

1. Method for efficient dialogue configuration and interpretation in a computer-assisted automated dialogue system, comprising:
- storing (100) a plurality of dialogue protocols for in each case at least two keywords, the dialogue protocols each specifying a dynamic sequence of a dialogue and the dynamic sequence of the dialogue describing sub-dialogues which are composed by way of branch points, the dialogue protocol specifying a presence of dialogue units and a dialogue progression which places the dialogue units in time sequence;
- selecting (101) a dialogue protocol as a function of at least two keywords provided (102) at runtime, at least the first keyword being provided by means of an acoustic user input using a technology for understanding a natural language, which detects from a pitch of the acoustic user input whether this is a question or a statement, and further at least one second keyword is provided by way of a control command, the user selecting at least the first keyword and the control command modelling a context of the selected keyword for this purpose and thus providing the at least second keyword, whereupon the corresponding dialogue protocol is selected;
- assigning (103) text elements to dialogue units of the dialogue protocol; and
- executing (104) the dialogue protocol at the runtime.

2. Method according to claim 1, wherein the dialogue units are stored as alphanumeric parameters.

3. Method according to either claim 1 or claim 2, wherein the dialogue units are stored in tabulated form.

4. Method according to any of the preceding claims, wherein in each case a dialogue unit specifies an activity of an actuator within the dialogue protocol.

5. Method according to any of the preceding claims, wherein a branch point is selected as a function of a user input and/or by a control command.

6. Method according to any of the preceding claims, wherein each dialogue unit predefines an activity of the dialogue system, an activity of a user, execution of control commands and/or termination of the method.

7. Method according to any of the preceding claims, wherein the execution (104) of the dialogue protocol at the runtime comprises operating an acoustic dialogue between the dialogue system and a user.

8. Method according to any of the preceding claims, wherein the method is executed on a mobile terminal, in a vehicle or on a stationary computing unit.

9. Method according to any of the preceding claims, wherein interfaces to existing internet-based services are provided.

10. System arrangement for efficient dialogue configuration and interpretation in a computer-assisted dialogue system, comprising:
- a storage unit set up to store (100) a plurality of dialogue protocols for in each case at least two keywords, the dialogue protocols each specifying a dynamic sequence of a dialogue and the dynamic sequence of the dialogue describing sub-dialogues which are composed by way of branch points, the dialogue protocol specifying a presence of dialogue units and a dialogue progression which places the dialogue units in time sequence;
- a computing unit set up to select (101) a dialogue protocol as a function of at least two keywords provided (102) at runtime, the system being set up to provide at least the first keyword by means of an acoustic user input using a technology for understanding a natural language, which is set up to detect from a pitch of the acoustic user input whether this is a question or a statement, and the system arrangement further being set up to provide at least one second keyword by way of a control command, the user selecting at least the first keyword, and the control command, for this purpose, being set up to model a context of the selected keyword and thus to provide the at least second keyword, whereupon the corresponding dialogue protocol is selected;
- a further computing unit set up to assign (103) text elements to dialogue units of the dialogue protocol; and
- a dialogue unit set up to execute (104) the dialogue protocol at the runtime.

11. Computer program product comprising control commands which carry out the method according to any of claims 1 to 9 when they are executed on a computer.

## Revendications

1. Procédé pour la conception et l'interprétation efficaces de dialogues dans un système de dialogue automatisé assisté par ordinateur, présentant les étapes suivantes :
- stockage (100) d'une pluralité de protocoles de dialogue, chacun pour au moins deux mots-clés, les protocoles de dialogue spécifiant chacun une séquence dynamique d'un dialogue et la séquence dynamique du dialogue décrivant des sous-dialogues qui sont composés à l'aide de branchements, le protocole de dialogue spécifiant une présence d'unités de dialogue et un déroulement de dialogue qui met les unités de dialogue en séquence temporelle ;
- sélection (101) d'un protocole de dialogue en fonction d'au moins deux mots-clés fournis (102) au cours du fonctionnement, au moins le premier mot-clé étant fourni au moyen d'une entrée acoustique de l'utilisateur en utilisant une technologie de compréhension d'une langue naturelle qui reconnaît, à partir du ton de l'entrée acoustique de l'utilisateur, s'il s'agit d'une question ou d'une affirmation, et en outre au moins un deuxième mot-clé étant fourni par une instruction de commande, l'utilisateur choisissant au moins le premier mot-clé et l'instruction de commande modélisant alors un contexte du mot-clé choisi et fournissant ainsi ledit au moins deuxième mot-clé, à la suite de quoi le protocole de dialogue correspondant est sélectionné ;
- association (103) de modules de texte à des unités de dialogue du protocole de dialogue ; et
- exécution (104) du protocole de dialogue au cours du fonctionnement.

2. Procédé selon la revendication 1, dans lequel les unités de dialogue sont stockées sous la forme de paramètres alphanumériques.

3. Procédé selon l'une des revendications 1 ou 2, dans lequel les unités de dialogue sont stockées sous forme de tableau.

4. Procédé selon l'une des revendications précédentes, dans lequel une unité de dialogue spécifie à chaque fois une activité d'un acteur au sein du protocole de dialogue.

5. Procédé selon l'une des revendications précédentes, dans lequel un branchement est sélectionné en fonction d'une entrée de l'utilisateur et/ou par une instruction de commande.

6. Procédé selon l'une des revendications précédentes, dans lequel chaque unité de dialogue prescrit une activité du système de dialogue, une activité d'un utilisateur, une exécution d'instructions de commande et/ou une terminaison du procédé.

7. Procédé selon l'une des revendications précédentes, dans lequel l'exécution (104) du protocole de dialogue au cours du fonctionnement comprend un exercice d'un dialogue acoustique entre le système de dialogue et un utilisateur.

8. Procédé selon l'une des revendications précédentes, dans lequel le procédé est exécuté sur un terminal mobile, dans un véhicule ou sur une unité de calcul fixe.

9. Procédé selon l'une des revendications précédentes, dans lequel des interfaces avec des services Internet existants sont fournies.

10. Agencement de système pour la conception et l'interprétation efficaces de dialogues dans un système de dialogue assisté par ordinateur, comprenant :
- une unité de mémoire conçue pour stocker (100) une pluralité de protocoles de dialogue, chacun pour au moins deux mots-clés, les protocoles de dialogue spécifiant chacun une séquence dynamique d'un dialogue et la séquence dynamique du dialogue décrivant des sous-dialogues qui sont composés à l'aide de branchements, le protocole de dialogue spécifiant une présence d'unités de dialogue et un déroulement de dialogue qui met les unités de dialogue en séquence temporelle ;
- une unité de calcul conçue pour sélectionner (101) un protocole de dialogue en fonction d'au moins deux mots-clés fournis (102) au cours du fonctionnement, l'agencement de système étant conçu pour fournir au moins le premier mot-clé au moyen d'une entrée acoustique de l'utilisateur en utilisant une technologie de compréhension d'une langue naturelle qui est conçue pour reconnaître, à partir du ton de l'entrée acoustique de l'utilisateur, s'il s'agit d'une question ou d'une affirmation, et l'agencement de système étant en outre conçu pour fournir au moins un deuxième mot-clé au moyen d'une instruction de commande, au moins le premier mot-clé étant choisi par l'utilisateur et l'instruction de commande étant conçue pour modéliser un contexte du mot-clé choisi et fournir ainsi ledit au moins un deuxième mot-clé, à la suite de quoi le protocole de dialogue correspondant est sélectionné ;
- une autre unité de calcul conçue pour associer (103) des modules de texte à des unités de dialogue du protocole de dialogue ; et
- une unité de dialogue conçue pour exécuter (104) le protocole de dialogue au cours du fonctionnement.

11. Produit logiciel d'ordinateur comprenant des instructions de commande qui mettent en œuvre le procédé selon l'une des revendications 1 à 9 lorsqu'il est exécuté sur un ordinateur.
